# EUROPÄISCHE PATENTANMELDUNG

(11) **EP 2 664 534 A2**
(43) Veröffentlichungstag der Anmeldung: **20.11.2013**
(21) Anmeldenummer: 13167650.4
(22) Anmeldetag: 14.05.2013
(51) Int. Cl.: B62M 3/08

(54) **Schuh-Pedal-Bindungssystem**

(30) Priorität: 15.05.2012 DE 102012104231
(71) Anmelder: BioConform GmbH, 07749 Jena (DE)
(72) Erfinder: Töpfer, Jörg, 07749 Jena (DE)
(74) Vertreter: Hasler, Erich

(57) **Zusammenfassung**

Die Erfindung betrifft ein (11) mit einem Fahrradpedal (15), umfassend einen Pedal-körper (16) mit wenigstens einer Auftrittsfläche (25) für einen Schuh (28), eine Pedalachse (21), mit welcher der Pedalkörper (16) drehbar an einer Tretkurbel festlegbar ist und ein erstes Haltemittel (17), welches zur Halterung des Schuhs (28) an der wenigstens einen Auftrittsfläche (25) angeordnet ist. Ferner besitzt das ein zweites Haltemittel (19), welches an dem ein Schuh (28) festlegbar ist und dazu vorgesehen ist, lösbar mit dem ersten Haltemittel (17) zusammenzuwirken. Das erste und zweite Haltemittel sind ein erster und zweiter Haftstreifen (17,19), welche durch miteinander Verkletten bzw. adhäsiv verbindend aneinander gehalten sind.

## Beschreibung

### Gebiet der Erfindung

Die Erfindung betrifft ein Schuh-Pedal-Bindungssystem gemäss Oberbegriff des Anspruchs 1 und eine Schuh-Pedal-Einheit gemäss Anspruch 13.

### Stand der Technik

Seit mehreren Jahrzehnten gehören Fahrradpedale, welche jeweils ein Paar Klemmelemente aufweisen, zum Stand der Technik. Das hintere Klemmelement steht zumeist durch eine Feder unter Vorspannung und ist parallel zur Drehachse des Pedals verschwenkbar. Das Paar Klemmelemente wirkt mit einer Schuhplatte zusammen, welche an einem Fahrradschuh im Fussballenbereich befestigt ist. Dieses Fahrradpedalsystem aus Pedal und entsprechender Schuhplatte ist unter dem Begriff Klick- oder Clipless-Pedal bekannt geworden. Diese Klickpedale wirken wie eine Art Sicherheitsbindung und sollen einen raschen Ausstieg in weniger als einer Sekunde erlauben. Dies ist insbesondere bei Sturzgefahr von Bedeutung. Typischerweise dreht der Radfahrer den Schuh mit der Ferse nach aussen um eine Achse, welche im Wesentlichen senkrecht zur Drehachse des Pedals steht. Das vordere Ende der Schuhplatte dient dabei als Drehpunkt und stützt sich während des Drehens an dem vorderen Klemmelement ab. Das hintere Klemmelement wird sodann gegen die Federkraft durch die Verdrehung der Schuhplatte nach hinten gedrückt und gibt die Schuhplatte frei.

Das Verdrehen der Schuhplatte, ausgelöst durch das Verdrehen des mit der Schuhplatte verbundenen Schuhs mit der Ferse, belastet die Kniebänder und Sprunggelenkbänder stark. Diese Belastung wird noch verstärkt, wenn der Radfahrer sehr rasch aus den Pedalen aussteigen muss, um einen Sturz zu vermeiden. Auch lassen Klickpedale nur eine relativ invariable Positionierung der Fahrradschuhe zu, wodurch die natürlichen Positionierungs- und Bewegungsmöglichkeiten der Fuss- bzw. Beingelenke des Benutzers eingeschränkt sind.

Ferner umfassen Klickpedale eine Mehrzahl von Einzelteilen, wie einem vorderen und hinteren Klemmelement, einer Feder und einer Achse, um welche das hintere Klemmelement verschwenkt wird, und sind dementsprechend kompliziert aufgebaut. Durch die Vielzahl von mechanischen Einzelteilen neigen Klickpedale auch zur Verschmutzung, insbesondere wenn sie im freien Gelände eingesetzt werden. Solche Verschmutzungen -insbesondere die der mechanisch zusammenspielenden - können dazu führen, dass die Klickpedale erschwert auszulösen sind und demzufolge eine erhöhte Sturzgefahr in sich bergen.

Üblicherweise ist die Auflagefläche eines Fahrradschuhs auf einem Klickpedal gering. Um trotzdem ausreichend Druck auf das Klickpedal zu bringen, müssen die Schuhsohlen relativ hart ausgeführt sein. Ein solcher Fahrradschuh ist daher wenig komfortabel und kann zu Bewegungseinschränkungen und sogar zu Schmerzen führen.

Die Schuhplatten, welche im Rennradbereich verwendet werden, sind beim Gehen mit den Fahrradschuhen hinderlich und gefährden den Radfahrer, da man mit solchen Fahrradschuhen sehr leicht ausrutscht.

Noch ein Nachteil der Klickpedale ist, dass sie grösstenteils aus Metallteilen hergestellt werden müssen, um den auftretenden Belastungen, insbesondere beim Ein- und Aussteigen standhalten zu können. Klickpedale haben daher ein dementsprechend hohes Gewicht.

### Aufgabe der Erfindung

Aufgabe der vorliegenden Erfindung ist es daher, ein Schuh-Pedal-Bindungssystem zu zeigen, das die vorstehenden Nachteile überwindet. Insbesondere ist es eine Aufgabe, ein Fahrradpedal-Bindungssystem zu zeigen, das ein biomechanisch günstiges Lösen des Fahrradschuhs von dem Fahrradpedal ermöglicht und trotzdem einfach und dementsprechend kostengünstig aufgebaut ist.

### Beschreibung

Erfindungsgemäss wird die Aufgabe bei einem Schuh-Pedal-Bindungssystem gemäss Oberbegriff des Anspruchs 1 dadurch gelöst, dass das erste und zweite Haltemittel ein erster und zweiter Haftstreifen sind.

Wenn in diesem Dokument von Haltestreifen gesprochen wird, so sei nicht nur ein üblicher längs geformter Streifen mit parallellaufenden Rändern offenbart, sondern alternativ jede flächige Form eines Haftelementes, die auf einem Pedal Platz findet.

Für den Begriff Schuh-Pedal-Bindungssystem soll im Rahmen dieses Dokuments nicht nur ein Pedal stehen, welches an einem Fahrrad eingesetzt wird, sondern auch ein Pedal, welches an Ergometern, Trainingsgeräten oder Rehabilitationsgeräten eingesetzt wird, bei dem ein zyklische Beugen und Strecken der Beine stattfindet. Der Begriff Pedal kann daher alternativ auch für Auftrittsflächen für Trainingsgeräte, wie beispielsweise sogenannte Cross-Trainer oder Rudergeräte, stehen. Die Auslöserichtung beispielsweise des Fahrradschuhs von dem Fahrradpedal lässt sich durch die Orientierung der Haftstreifen relativ zueinander einfach festlegen. Die Haftstreifen besitzen eine geringe Höhe zwischen 10 und 2 mm, bevorzugt zwischen 8 bis 3 mm und besonders bevorzugt zwischen 6 und 4 mm. Dadurch befindet sich die Schuhsohle beim Pedalieren im Vergleich zu Klickpedalen des Stands der Technik nur knapp über der Pedalachse, wodurch die Bewegungskontrolle beim Pedalieren verbessert wird. Die geringe Dicke des Haftstreifens, welcher an der Schuhsohle festgelegt ist, ermöglicht ein Gehen mit dem Fahrradschuh, ohne dass im Ballenbereich eine störende Erhöhung vorhanden wäre. Das erfindungsgemässe Schuh-Pedal-Bindungssystem umfasst neben dem Pedal und dem Schuh zusätzlich lediglich die beiden Haftstreifen, welche kostengünstig in der Herstellung sind. Ferner ist es augenscheinlich, dass das erfindungsgemässe Schuh-Pedal-Bindungssystem ein geringes Gewicht besitzt, da die beiden Haftstreifen zusammen ein Gewicht von weniger als 25 g besitzen. Die Haftstreifen können grossflächiger an der Schuhsohle und an der wenigstens einen Auftrittsfläche des Fahrradpedals angebracht werden als bekannte Klickmechanismen. Dadurch besitzen die Fahrradschuhe eine vergrösserte Auflagefläche auf den Fahrradpedalen, was zur Folge hat, dass die Schuhsohlen weicher als bei Klickpedalen ausgeführt sein können. Die Schuhsohlen können daher für den Fahrradfahrer komfortabler ausgeführt sein, ohne dass während des Pedalierens ein störender Druck auf die Fussballen wirken würde, die Beweglichkeit eingeschränkt wäre oder ein Kraftverlust durch zu weiche Sohlen auftreten würde. Der Nutzer kann damit großflächiger, biomechanisch konform und somit mehr Kraft vom Fuß auf das Pedal übertragen und ausdauernder Pedalieren, als mit üblichen steifen Klick-Systemen. Gleichzeitig kann er mit derart ausgestatten Schuhen auch gut gehen bzw. laufen, was besonders beim Triathlon und bei Betätigungen vorteilhaft ist, bei denen sich Laufen und Radfahren abwechseln.

Die Haftfläche der beiden Haftstreifen beträgt je zwischen 100 und 4, bevorzugt zwischen 70 und 10 und besonders bevorzugt zwischen 50 und 15 cm².

In einer bevorzugten Ausführungsform ist der erste Haftstreifen ein Pilzband oder ein Hakenband und der zweite Haftstreifen ein Velourband oder ein Flauschband. Das Velourband besitzt Schlingen in welchen sich die Pilzkappen verhaken können. Diese Form des Zusammenwirkens der beiden Haftstreifen hat den Vorteil, dass sich die Haftstreifen in im Wesentlichen senkrechter Abzugsrichtung schwer voneinander lösen lassen. Zieht ein Fahrradfahrer während des Pedalierens mit dem Fahrradschuh an dem Fahrradpedal, so halten das Pilzband und das Velourband aneinander. In einer anderen Belastungsrichtung, beispielsweise, wenn der Fahrradschuh relativ zu dem Fahrradpedal um seine Längsachse aufgekantet wird, ist die Haltekraft geringer und der Fahrradfahrer kann den Fahrradschuh von dem Fahrradpedal lösen. Da das Velour- bzw. Flauschband weniger abriebempfindlicher und leichter zu reinigen ist als das Pilz- oder Hakenband, ist es sinnvoll, das Velourband an der Schuhsohle zu befestigen. Auch brechen die Pilze des Pilzbandes beim Gehen unter Gewichtsbelastung leicht ab. Denkbar wäre es natürlich auch, das Pilz- oder Hakenband an der Schuhsohle und das Velour- oder Flauschband an der Auftrittsfläche des Fahrradpedals zu befestigen. Auch andere Paarungen von Haftstreifen sind möglich, wenn sie eine ausreichende Haltekraft und Lösen in einer Vorzugsrichtung erlauben. So kann durch geeignete Auswahl der Haftstreifen der Kraftschluss vergrössert oder verkleinert werden und an die individuellen (orthopädischen) Bedürfnisse des Benutzers angepasst werden. Durch das Velourdesign oder die Faserlängen des Velours ist es beispielsweise denkbar, eine geringe Verdrehung des Schuhs auf der Auftrittsfläche des Pedals zu ermöglichen. Zu solchen Paarungen zählen auch Pilz in Pilz Kombinationen oder Pilz auf Flausch Kombinationen.

In einer weiteren Ausführungsform sind sowohl der erste als auch der zweite Haftstreifen ein Pilzband. In dieser Ausführungsform verhaken sich die Pilzkappen des ersten und zweiten Haftstreifens. Für das oftmalige Verbinden und Lösen der Haftstreifen ist jedoch eine Kombination aus Velourstreifen und Pilzstreifen besser geeignet. Denkbar wäre auch ein Zusammenhalten der Haftstreifen nach dem Prinzip der Adhäsion. Dabei ist es möglich, die beiden Haftstreifen so nahe aneinander zu bringen, dass sie durch Van-der-Waals Kräfte aneinander gehalten sind. Von Vorteil ist es bei der Adhäsionshaftung, wenn einer der Haftstreifen eine möglichst glatte Oberfläche besitzt. Der andere Haftstreifen besteht aus einer Silikonfolie mit bis zu 30.000 Haftelementen pro cm². Diese winzigen Haftelemente im Nanobereich haben einen derart geringen Abstand zu der Oberfläche des gegenüberliegenden Haftstreifens, dass zwischen den beiden Haftstreifen Van-der-Waals Kräfte wirken können. Diese Haftstreifen können mit Wasser gereinigt werden und haben nach der Reinigung das ursprüngliche Haftvermögen.

Zweckmässigerweise ist am Pedalkörper wenigstens eine Ausnehmung vorgesehen, in welcher Ausnehmung ein den ersten Haftstreifen haltender Haltekörper austauschbar festgelegt werden kann. Der Haltekörper ist rasch austauschbar, falls der erste Haftreifen abgenutzt ist oder gegen einen Haltekörper mit einem anderen Haftstreifenmaterial getauscht werden soll.

In einer besonders bevorzugten Ausführungsform sind der erste und zweite Haftstreifen im verbundenen Zustand durch Aufkanten des zweiten Haftstreifens im Wesentlichen in einem Aufklappwinkel in Frontalebene in Richtung von der Pedalachse weg, analog einer Hyper-Pronationsbewegung oder einer Hyper-Supinationsbewegung, mit geringerem Kraftaufwand voneinander lösbar, als in anderen Abzugsrichtungen. Diese Orientierung ermöglicht es, dass die Haftstreifen durch Aufkanten der Schuhsole um ihre Längsachse voneinander lösbar sind. Zum Aussteigen aus dem Pedal verkippt der Benutzer daher den Schuh nach innen oder aussen etwas stärker, als bei einer bewegungsbedingten physiologischen Aufkantung nötig wäre. Denkbar sind aber auch andere Orientierungen der Haftstreifen, um andere Vorzugslöserichtungen zu definieren. Beispielsweise könnten die Pilze bzw. Schlingen der Haftstreifen auch derart zueinander orientiert sein, dass die Haftstreifen durch Verdrehen voneinander gelöst werden. So ist es auch denkbar, die Haftstreifen an die individuellen anatomischen Verhältnisse anzupassen, da die Position des Schuhs zum Pedal als auch die Auslöserichtung anpassbar sind.

Zweckmässigerweise weist der zweite Haftstreifen eine grössere Haftfläche als der erste Haftstreifen auf. Der Mittelpunkt des ersten und des zweiten Haftstreifens müssen demnach nicht genau übereinander platziert sein, damit die gesamte Haftfläche des Haftstreifens mit der kleineren Haftfläche (erster Haftstreifen) in Kontakt mit der Haftfläche des Haftreifens mit der grösseren Haftfläche (zweiter Haftstreifen) kommt.

Vorteilhaft ist der zweite Haftstreifen an einem Schuhadapter angeordnet, welcher mit der Schuhsohle eines Fahrradschuhs im Bereich des Fussballens eines Fahrradfahrers verbindbar ist. Der zweite Haftstreifen nutzt sich stärker ab als der erste Haftstreifen, da dieser auch beim Gehen mit den Fahrradschuhen belastet wird. Das Vorsehen des Adapters hat den Vorteil, dass der zweite Haftstreifen rasch gegen einen neuen Haftstreifen mit neuem Adapter austauschbar ist. Zweckmässigerweise ist der Adapter mit dem zweiten Haftstreifen an der Schuhsohle im Bereich des Fussballens eines Fahrradfahrers angeordnet, da üblicherweise mit dem Fussballen pedaliert wird und dort der grösste Anpressdruck auf den zweiten Haftstreifen herrscht. Denkbar wäre es auch, dass der erste Haftreifen ebenfalls mit einem Adapter ausgestattet ist, um rasch gegen einen neuen ersten Haftstreifen ausgetauscht werden zu können.

Als vorteilhaft erweist es sich, wenn der Schuhadapter eine Halteplatte ist, welche unter Formschluss an der Schuhsohle gehalten ist. Ein Austausch des zweiten Haftstreifens kann dann rasch erfolgen, indem die Halteplatte mit dem abgenutzten zweiten Haftstreifen von der Schuhsohle gelöst wird und eine neue Halteplatte mit der Schuhsohle, beispielsweise durch Aufschieben auf eine Halteschiene, formschlüssig verbunden wird. Die Aussenabmessungen der Halteplatte entsprechen zweckmässigerweise im Wesentlichen den Aussenabmessungen des zweiten Haftstreifens, können dessen Abmessungen aber auch übersteigen, um eine noch stabilere Verbindung mit der Schuhsohle zu gewährleisten. Denkbar ist es auch dass das Schuhprofil abziehbar ist und ein Fenster mit einem unter dem abgezogenen Schuhprofil liegenden Haftstreifen freigibt. Das abgenommene Schuhprofil wirkt wie eine Schutzkappe, welche jederzeit wieder anbringbar ist, um den Haftstreifen zu schützen. Die partiell abnehmbare Schuhsohle zeichnet sich auch dadurch aus, dass der Haftstreifen nachrüstbar ist, da das Fenster bevorzugt eine Oberfläche besitzt, an dem Haftstreifen besonders gut haften.

In einer weiteren besonders bevorzugten Ausführungsform ist an der wenigstens einen Auftrittsfläche eine Positionierhilfe zur Positionierung des Fahrradschuhs an dem Fahrradpedal vorgesehen. Die Positionierhilfe ermöglicht es, dass der Fahrradfahrer den zweiten Haftstreifen exakt mit dem ersten Haftstreifen zur Deckung bringen kann. Dadurch ist sichergestellt, dass sich die Haftflächen des ersten und zweiten Haftstreifens vollständig miteinander verhaken.

Bevorzugt besitzt die Positionierhilfe im Wesentlichen die Gestalt einer Erhebung, welcher sich in Richtung weg von der Auftrittsfläche verjüngt. Die Erhebung wirkt daher als ein Führungszapfen, welcher den ersten und zweiten Haftstreifen justiert bzw. zur Deckung bringt. Bevorzugt ist die Erhebung ein Kegelstumpf, könnte jedoch auch ein sternförmiger Pyramidenstumpf sein, welcher den Vorteil hat, dass er in mehreren Positionen mit einer Ausnehmung in der Schuhsohle verrastbar ist.

Mit Vorteil ist die Erhebung in einer Ausnehmung an der Schuhsohle aufnehmbar, wobei die Innenabmessungen der Ausnehmung im Wesentlichen den Aussenabmessungen der Erhebung entsprechen. Der erste und zweite Haftstreifen werden durch das Zusammenwirken von Erhebung und Ausnehmung zueinander ausgerichtet. Bevorzugt sind die Erhebung und die Ausnehmung mittig an dem ersten bzw. zweiten Haftstreifen angeordnet. Erfordert es die Gestaltung des Fahrradpedals oder der Schuhsohle, so können die Erhebung bzw. die Ausnehmung auch in Positionen vorgesehen sein, welche von der Mitte abweichen. Möglich ist es auch, die Erhebung an der Schuhsohle und die Ausnehmung an dem Fahrradpedal vorzusehen, jedoch könnte die Erhebung dann beim Gehen hinderlich sein. Die Positionierhilfe kann auch realisiert sein, indem der erste Haftstreifen auf einer Erhebung an der Auftrittsfläche angeordnet ist. Der zweite Haftstreifen ist in einer Ausnehmung an der Schuhsohle angeordnet. Erhebung und Ausnehmung wirken, wie oben beschrieben, zusammen. Diese Ausführungsform hat den zusätzlichen Vorteil, dass der zweite Haftstreifen in der Ausnehmung vor Verschmutzungen beim Gehen mit den Fahrradschuhen geschützt ist und dadurch eine erhöhte Lebensdauer besitzt.

Zweckmässigerweise kann der zweite Haftstreifen an einem Halteriemen bzw- Band festgelegt sein, welcher Halteriemen seinerseits an bzw. um einen Schuh bzw. einem Fahrradschuh anzubringen möglich ist. Der Riemen ermöglicht eine flexible Befestigung des zweiten Haftstreifens nicht nur an einem Fahrradschuh sondern an jedem Schuh. Der Riemen wird dabei um den Schuh geschlungen und geschlossen, wobei der Halteriemen derart zu positionieren ist, dass der zweite Haftstreifen im Bereich des Fussballens zu liegen kommt. Das Fahrradpedalsystem ist in dieser Ausführungsform daher unabhängig von den verwendeten Schuhen. Bevorzugt ist der Halteriemen aus einem dehnbaren Material gefertigt, beispielsweise einem Webgummiband. Der Halteriemen lässt sich dann unter Vorspannung um den Schuh spannen und hält daher zuverlässig an dem Schuh. Zum Verschluss des Halteriemens ist eine Gürtelschliesse vorgesehen. Das durch die Gürtelschliesse gezogene und gespannte Riemenende lässt sich bevorzugt mit einem Klettverschluss an dem restlichen Halteriemen befestigen.

Zweckmässigerweise ist das Zusammenwirken des ersten und zweiten Haftstreifens derart aufeinander abgestimmt, dass diese erst aneinander haften, wenn ein Anpressdruck zwischen dem ersten und zweiten Haftstreifen vorhanden ist, welcher einem Gewicht zwischen 0,1 und 5 kg, bevorzugt zwischen 0,5 und 3 kg und besonders bevorzugt zwischen 1 und 2 kg entspricht. Durch dieses konstruktive Merkmal kann die Schuhsole auf dem Fahrradpedal justiert werden, ohne dass die beiden Haftstreifen miteinander verhaken und folglich eine Justierung verhindern. Eine derartige funktionelle Form kann erreicht werden, indem die Auftrittsfläche des Pedals konkav und/oder kaskadenartig ausgestaltet wird. Die beiden Haftstreifen treten zwar in Kontakt, aber erst kraftschlüssig, wenn der Fahrradfahrer einen kräftigen Druck auf die Schuhsohle ausübt und durch eine Konvex - Verformung der Schuhsohle sich der Konkavität des Pedalkörpers deutlich nähert.

Dadurch kann der Fahrradfahrer den Fahrradschuh gezielt auf dem Fahrradpedal einrichten, bevor die beiden Haftstreifen aneinander halten.

Ein weiterer Aspekt der Erfindung betrifft ein Schuh-Pedal-Bindungssystem, wie es vorgängig beschrieben wurde und einen Schuh, an welchem der zweite Haftstreifen festgelegt ist. Die Schuhsohle des Schuhs ist bevorzugt derart ausgebildet, dass der zweite Haftstreifen gut an der Schuhsohle haftet, jedoch unter erhöhter Krafteinwirkung von der Schuhsohle entfernbar ist, falls dies notwendig sein sollte. Ist der zweite Haftstreifen beispielsweise abgenutzt, so kann er abgezogen werden und durch einen neuen Haftstreifen ersetzt werden.

Zweckmässigerweise besitzt die Schuhsohle insbesondere im Ballenbereich eine Oberfläche, an welcher der zweite Haftstreifen durch Verklebung und/oder einen Formschluss befestigt ist. Die Schuhsohle weist demnach eine Oberfläche auf, welche geeignet ist, um mit dem zweiten Haftstreifen verklebt zu werden. Selbiges gilt sinngemäss für die Befestigung des ersten Haftstreifens an der Auftrittsfläche des Fahrradpedals. Die Haftstreifen werden vielfach mit einer aufgebrachten Klebeschicht angeboten. Die Haftstreifen können daher besonders günstig zugekauft werden und müssen nicht mehr an die Verwendung für das erfindungsgemässe Fahrradbindungssystem angepasst werden.

Weitere Vorteile und Merkmale ergeben sich aus der nachfolgenden Beschreibung zweier Ausführungsbeispiele der Erfindung unter Bezugnahme auf die schematischen Darstellungen. Es zeigen in nicht massstabsgetreuer Darstellung:
- Figur 1:: eine Seitenansicht eines Schuhs mit einem Velourstreifen im Ballenbereich;
- Figur 2:: eine Seitenansicht eines Schuhs, bei dem der Velourstreifen mittels eines Adapters an dem Schuh befestigt ist;
- Figur 3:: den Schuh aus Figur 1 bzw. 2 in einer axonometrischen Ansicht;
- Figur 4:: ein Pedal mit einem Pilzband an wenigstens einer seiner Auftrittsflächen;
- Figur 5:: das Pedal aus Figur 4 in einer axonometrischen Ansicht;
- Figur 6:: das erfindungsgemässe Schuh-Pedal-Bindungssystem mit einem Schuh gemäss den Figuren 1 bis 3 und einem Pedal gemäss den Figuren 4 bis 5 in einer ersten Ausführungsform;
- Figur 7:: eine Unteransicht eines Fahrradschuhs mit einem kreisförmigen Velourband;
- Figur 8:: den-Schuh aus Figur 7 in einer axonometrischen Ansicht;
- Figur 9:: eine Draufsicht auf ein Pedal mit sich gegenüberliegenden Pilzstreifen, zwei sich gegenüberliegenden Haltekörpern, welche die Pilzstreifen tragen und einer Positionierhilfe an beiden Auftrittsflächen des Pedals;
- Figur 10:: eine Vorderansicht des Pedals aus Figur 9;
- Figur 11:: eine axonometrische Ansicht des Pedals aus Figur 9;
- Figur 12:: das erfindungsgemässe Schuh-Pedal-Bindungssystem mit einem Schuh gemäss der Figuren 7 bis 8 und einem Pedal gemäss den Figuren 9 bis 11 in einer zweiten Ausführungsform;
- Figur 13:: eine Prinzipskizze, welche das Zusammenwirken von Velourstreifen und Pilzstreifen zeigt;
- Figur 14:: eine Prinzipskizze, welche das Zusammenwirken von zwei Pilzstreifen zeigt und
- Figur 15: Eine Draufsicht auf einen Halteriemen, an welchem ein Velourstreifen befestigt ist.

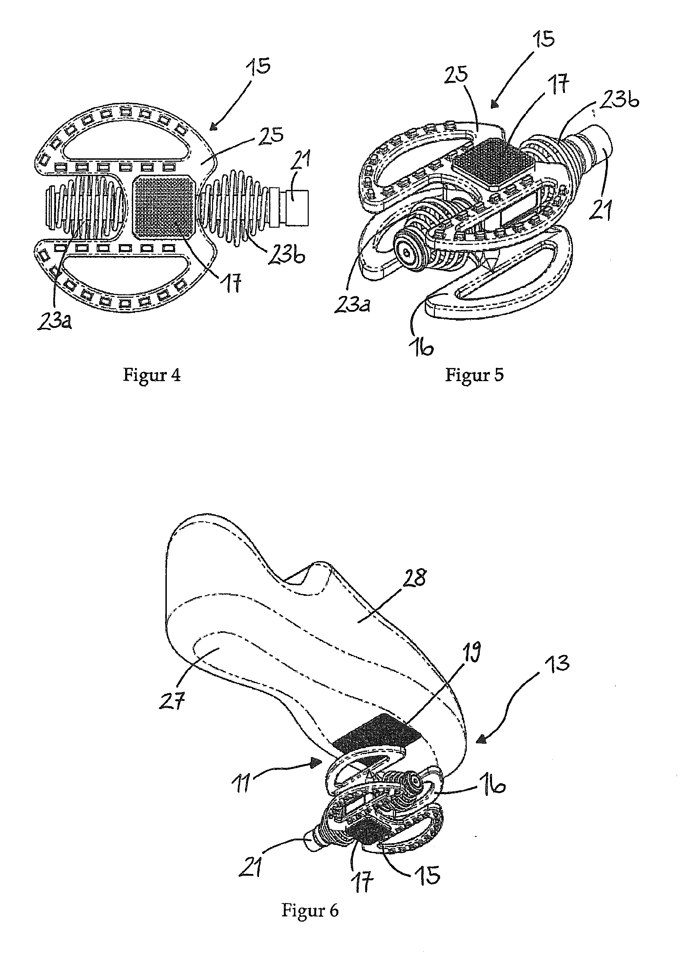

Die Figur 6 zeigt das erfindungsgemässe Fahrradpedalsystem 11 bzw. das Fahrradbindungssystem 13 in einer ersten Ausführungsform. Das Fahrradpedalsystem 11 umfasst ein Fahrradpedal 15 gemäss den Figuren 4 bis 6 mit einem Pedalkörper 16 und einem ersten Haftstreifen in Gestalt eines Pilzstreifens 17. Der Pilzstreifen 17 wirkt mit einem zweiten Haftstreifen in Gestalt eines Velourstreifens 19 zusammen. Der Pilzstreifen 17 und der Velourstreifen 19 bilden also eine gemeinsame Verbindung, welche dem Fachmann als Klettverschluss bekannt ist. Das Fahrradpedal 15 ist durch eine Pedalachse 21 drehbar an einer Fahrradkurbel gehalten. Die Federn 23a ,23b ermöglichen, dass der Pedalkörper 16 gegen den Federdruck entlang der Pedalachse 21 verschiebbar ist. Dieser zusätzliche Freiheitsgrad führt zu einem besonders physiologischen Pedalieren entsprechend der natürlichen biomechanischen Anforderungen.

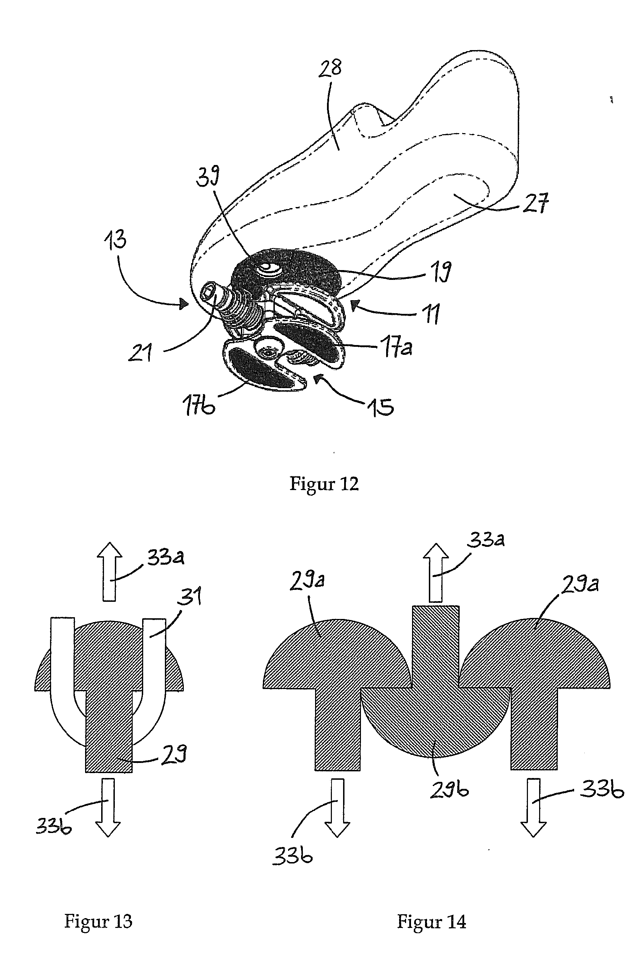

Der Pilzstreifen 17 ist vorzugsweise mit der Auftrittsfläche 25 des Pedals 15 verklebt. Der Velourstreifen 19 ist an der Schuhsohle 27 eines Fahrradschuhs 28 festgelegt, vorzugsweise ebenfalls verklebt. Die gewählte Auswahl des ersten und zweiten Haftstreifens als Pilzstreifen 17 und Velourstreifen 19 ist lediglich eine bevorzugte Auswahl aus einer Vielzahl von Möglichkeiten auf dem Gebiet der Klettverschlüsse. Figur 13 zeigt die prinzipielle Haftverbindung zwischen einem Pilzkopf 29 des Pilzsteifens 17 und einer Schlinge 31 des Velourstreifens 19. In Figur 14 ist gezeigt, dass sowohl der erste wie auch der zweite Haftstreifen als Pilzsteifen ausgebildet sein können. Figur 13 und 14 zeigen, dass die beiden Streifen sehr gut aneinander haften, wenn sie in Pfeilrichtung 33a, 33b von einander weggezogen werden. Dies liegt an den Vorsprüngen der Pilzköpfe 29, welche sich mit den Schlingen bzw. untereinander (Pilzköpfe 29a,29b) verhaken. Werden die Haftstreifen hingegen in eine andere Richtung als in Pfeilrichtung, insbesondere von einem Ende beginnend, voneinander abgelöst, so ist die Haftkraft weniger stark, da die Pilzköpfe 29a, 29b leichter auseinander gleiten bzw. aus den Schlingen 31 gezogen werden. Andere Kombinationen von Haftstreifen, sofern die vorstehend beschriebenen Haftkriterien erfüllt sind, sind beispielsweise Haken oder T-Profile, welche in T-förmigen Hohlräumen verhakt sind.

Das Lösen der Haftstreifen in einer Vorzugsrichtung, macht sich das erfinderische Fahrradpedalsystem 11 zu nutze. Wird mit Hilfe des Fahrradschuhs 28 an dem Fahrradpedal 15 in einer Richtung im Wesentlichen senkrecht zur Pedalachse 21 gezogen, so lösen sich die Haftstreifen nicht voneinander. Wird die Schuhsohle nach innen oder aussen um ihre Längsachse verkippt, so lösen sich die Haftstreifen 17,19 voneinander. Die Bewegung, die der Fahrradfahrer zur Lösung der Verbindung zwischen Fahrradpedal 15 und Fahrradschuh 28 ausführen muss, ist also eine Kippbewegung im Wesentlichen senkrecht zu der Pedalachse 21. Diese Bewegung ist biomechanisch konformer als die Verdrehbewegung bei Klickpedalen des Stands der Technik, da sowohl die inneren und äusseren Knie- als auch die Sprunggelenkbänder bei einer Kippbewegung weniger belastet werden, als bei einer Drehbewegung der Fussschaufel mit Drehzentrum in der Ferse. Die Auslösekraft zur Lösung des ersten und zweiten Haftstreifens voneinander kann durch eine Auftrittsfläche 25 justiert werden, welche in Richtung der Pedalachse 21 oder von der Pedalachse 21 weg gekrümmt ist. Dadurch kann die Auslösekraft an den Enden der Haftstreifen verstärkt oder abgeschwächt werden.

Der Velourstreifen 19 ist an der Schuhsohle 27 angeordnet, da der Velourstreifen 19 weniger zu Verschmutzungen neigt, als der Pilzstreifen 17 und der Velourstreifen 19 beim Gehen mit dem Schuh 28 insbesondere einem Fahrradschuh zwangsläufig mit Strassenschmutz in Berührung kommt. Möglich ist es aber auch, den Pilzstreifen 17 an der Sohle 27 zu verkleben und den Velourstreifen 19 an der Auftrittsfläche 25 anzukleben. Wie schon weiter oben beschrieben, ist das Verkleben die bevorzugte Befestigungsmethode, da die Anbieter von Haftstreifen bzw. Klettverschlüssen auch eine dauerhafte Verklebung mit dem Untergrund zumeist zusammen mit den Haftstreifen anbieten. Denkbar ist es aber auch die Haftstreifen durch eine andere Befestigungsmethode, beispielsweise ein Anschrauben, an der Sohle 27 und der Auftrittsfläche 15 festzulegen, solange diese Befestigungsmethode nach Abnutzung der Haftstreifen einen Austausch selbiger erlauben. Die Haftstreifen lassen sich durch langsames Abziehen, bevorzugt unter Wärme und erhöhter Krafteinwirkung von der Schuhsohle 27 bzw. der Auftrittsfläche 25 lösen. Die Höhe des Fahrradschuhs 28 ist durch den Velourstreifen 19 nur unwesentlich vergrössert. Der Fahrradschuh 28 eignet sich daher auch gut zum Gehen. Ferner ermöglicht die geringe Höhe des Fahrradschuhs 28 auch ein deutlich besseres gefühlsmäßig kontrollierbareres Pedalieren, als die durch die Schuhplatten des Stands der Technik erhöhten Fahrradschuhe.

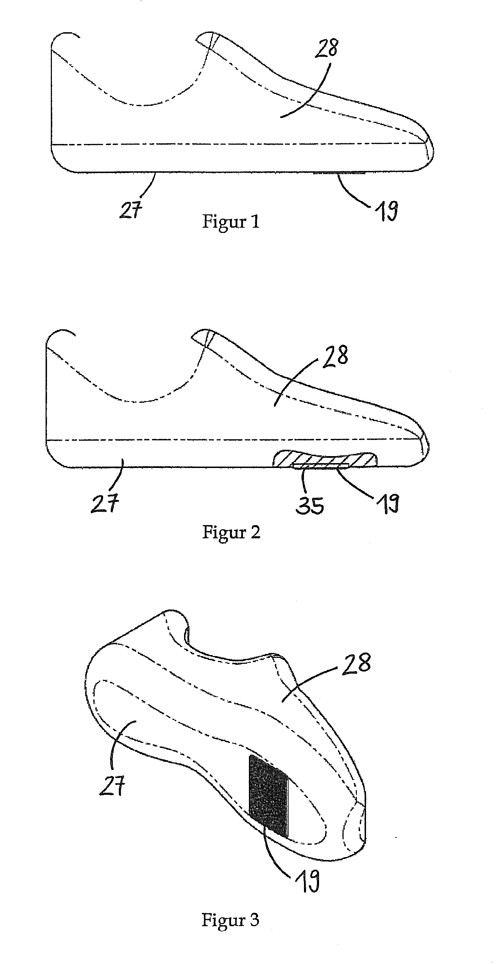

In Figur 2 ist eine weitere Möglichkeit der Befestigung des Velourstreifens 19 an der Sohle 27 gezeigt. Der Velourstreifen 19 ist dauerhaft an einer Halteplatte 35 befestigt, welche rasch an der Schuhsohle 27 befestigbar ist. Denkbar ist beispielsweise eine Schwalbenschwanzverbindung, bei welcher die Halteplatte 35 entlang einer schwalbenschwanzförmigen Schiene auf die Schuhsohle 27 aufschiebbar ist und in der Endstellung mit der Schuhsohle 27 verrastet. Der Velourstreifen 19 ist bei Abnutzung daher rasch durch einen neuen ersetzt.

Der Velourstreifen 19 besitzt Abmessungen, welche die Abmessungen des Pilzstreifens 17 übersteigen. Der Fahrradfahrer muss daher den Velourstreifen 19 nicht genau auf dem Pilzstreifen 17 platzieren, um den Pilzstreifen 17 vollflächig mit dem Velourstreifen 19 in Kontakt zu bringen. Der Pilzstreifen 17 besitzt eine Länge bzw. Breite zwischen 3 und 10 cm, bevorzugt zwischen 4 und 8 cm und besonders bevorzugt zwischen 5 und 6 cm. Der Velourstreifen übersteigt diese Aussenabmessungen des Pilzstreifens um 1 und 5 cm, bevorzugt um 2 und 4 cm und besonders bevorzugt um 2,5 und 3,5 cm.

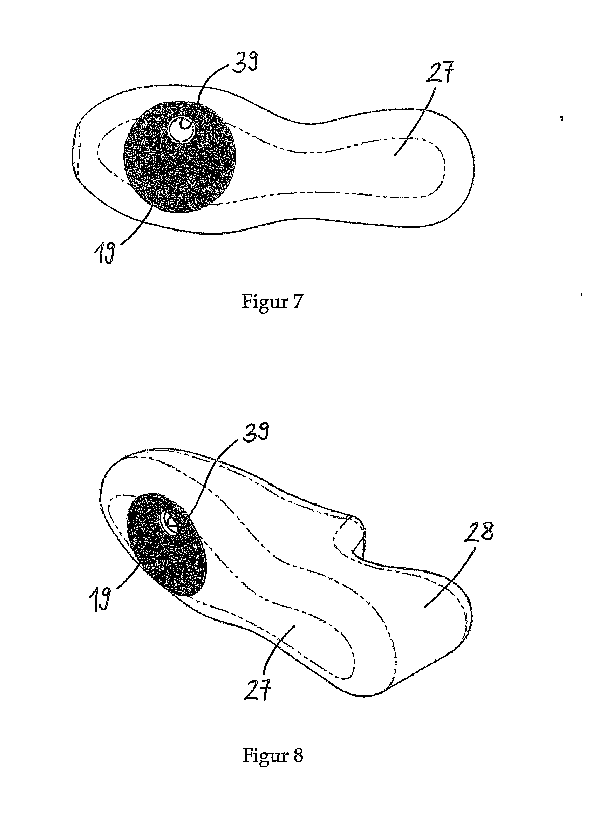

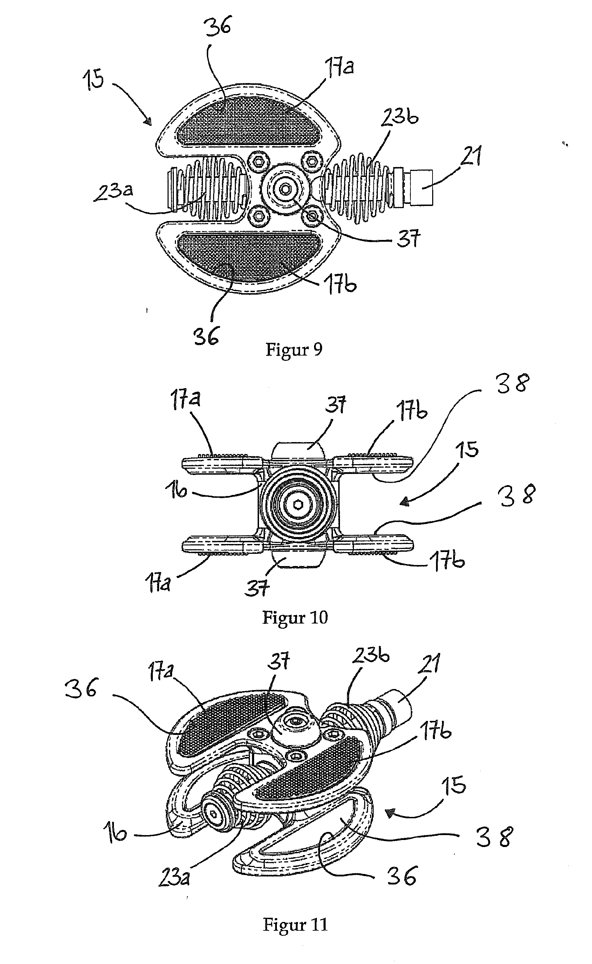

In den Figuren 7 bis 12 ist eine zweite Ausführungsform des erfindungsgemässen Fahrradpedalsystems 11 gezeigt. Die Figuren 9 bis 11 zeigen, dass die Pilzstreifen 17a, 17b nicht direkt an den Auftrittsflächen 25 festgelegt sein müssen, sondern auch an Haltekörpern 38 festgelegt sein können. Diese Haltekörper 38 sind ihrerseits in Ausnehmungen 36 aufgenommen. Bevorzugt sind die Haltekörper 38 form- und oder reibschlüssig in den Ausnehmungen 36 gehalten. Beispielsweise können die Haltekörper von den den Auftrittsflächen 25 abgewandten Seiten unter Reibschluss in die Ausnehmungen 36 eingelegt werden. Ein Herausziehen der Haltekörper 38 aus den Ausnehmungen 36 während des Pedalierens kann durch an den Haltekörpern vorgesehenen Vorsprüngen (in den Figuren nicht gezeigt) verhindert werden. Es versteht sich, dass diese Vorsprünge bei Einlegen der Haltekörper 38 an den Innenseiten der Ausnehmungen 36 zu liegen kommen. Die vorstehend beschriebenen Merkmale ermöglichen ein rasches Austauschen der Pilzstreifen 17a,17b resp. der Haltekörper 38.

An der Auftrittsfläche 25 ist eine Positionierhilfe in Gestalt eines Kegelstumpfs 37 angeordnet. Der Kegelstumpf 37 ist in einer Ausnehmung 39 der Schuhsohle 27 aufnehmbar, deren Innenabmessungen im Wesentlichen den Aussenabmessungen des Kegelstumpfs 37 entsprechen. Der Radfahrer kann den Velourstreifen 19 ohne Aufwand genau über den Pilzstreifen 17a, 17b positionieren, indem der Kegelstumpf 37 als ein Zapfen wirkt und in die Ausnehmung 39 gleitet. Da sich der Durchmesser des Kegelstumpfs 37 in Richtung der Auftrittsfläche 25 erweitert, wird der Velourstreifen 19 automatisch mit den Pilzstreifen 17a, 17b zur Deckung gebracht. Der Kegelstumpf 37 ist vorzugsweise mittig auf der Auftrittsfläche 25 positioniert. Durch die besondere Ausgestaltung des Pedalkörpers 16 ist der Kegelstumpf 37 im Fall der Figuren 9 und 11 nicht mittig ausgerichtet. Die restliche Fläche der Auftrittsfläche 25 ist zur Positionierung der Pilzstreifen 17a, 17b genutzt.

Das erfindungsgemässe Schuh-Pedal-Bindungssystem 11 bzw. die erfindungsgemässe Schuh-Pedal-Einheit 13 verbindet den Schuh 28 mit dem Pedal 15 durch das Zusammenwirken zweier Haftstreifen basierend auf dem Klettverschluss-Prinzip. Bevorzugt sind die Haftstreifen an der Sohle 27 bzw. an der Auftrittsfläche 25 angeklebt und lassen sich vom jeweiligen Untergrund bei Abnutzung entfernen. Die Haftstreifen lassen sich in einer Vorzugsrichtung, nämlich wenn der Schuh nach innen oder nach aussen verkippt wird analog einer Hyper-Supinations - bzw. einer Hyper-PronationsBewegung des Fußes, voneinander trennen. Wird der Schuh 28 jedoch in einer Richtung senkrecht zur Pedalachse 21 bewegt, besitzen die Haftstreifen eine Haltekraft, welche die Zugkraft, die ein durchschnittlicher Radfahrer aufzubringen vermag, übersteigt.

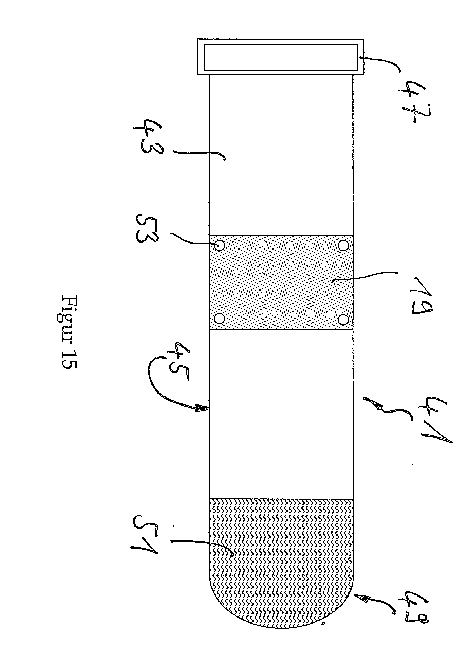

In der Figur 15 ist eine Ausführungsform des Fahrradpedalsystems gezeigt, bei welchem der zweite Haftstreifen 19 auf einem Halteriemen 41 bzw. einem Halteband befestigt ist. Der Halteriemen 41 hat den Vorteil, dass er um jeden Schuh im Bereich des Ballens geschlungen werden kann, und der zweite Haftstreifen 19 dadurch an jedem Schuh gehalten werden kann. Das Fahrradpedalsystem ist daher sehr flexibel einsetzbar, da es mit jedem Schuh, gleichgültig ob Fahrradschuh, Sportschuh oder Halbschuh, verwendet werden kann.

Der Halteriemen 41 ist bevorzugt aus einem Webgummiband hergestellt, kann aber auch aus jedem anderen elastischen Material hergestellt sein. Wird der Halteriemen um einen Schuh geschlungen, so entsteht eine Aussenseite 43 und eine Innenseite 45. Zur Befestigung an dem Schuh wird das einer Schnalle 47 gegenüberliegende Halteriemenende 49 durch die Schnalle 47 geschleift, um den Schuh vorgespannt und umgelegt. Das Ende 49 ist mit einer Klettoberfläche 51, welches beim Umschlagen des Endes 49 um die Schnalle 47 an der Aussenseite 43 haftet. Dazu weist die Aussenseite 43 wenigstens teilflächig eine Flauschoberfläche auf, welche mit der Klettoberfläche 51 zusammenwirkt. Auch ist es denkbar, dass die Aussenseite 43 mit Ausnahme der Klettoberfläche 51 vollflächig mit dem zweiten Haftstreifen 19 bedeckt ist. Der zweite Haftstreifen 19 übernimmt in diesem Fall die Halterung des Halteriemens 41 an dem Pedal 15 und die Halterung der Klettoberfläche 51.

Damit ein Abrutschen von dem Schuh verhindert wird, ist die Innenseite 45 des Halteriemens 41 mit einer rutschhemmenden Oberfläche versehen oder ist aus rutschhemmendem Material ausgeführt (z.B. ebenfalls Flauschmaterial).

In einer bevorzugten Ausführungsform ummantelt das Flauschband zirkulär den darunterliegenden Haltriemen 41 bzw. das Halteband und dient damit pedalseitig zur Verbindung mit dem Klett des Pedals und schuhseitig zur griffigen Verbindung mit der Schuhsohle 27. Alternativ kann die Innenseite 45 auch eine gummierte Oberfläche besitzen. Der zweite Haftstreifen 19 ist mit einer bevorzugt nicht lösbaren Verbindung an der Aussenseite 43 befestigt. In der Figur 6 sind Nieten 53 gezeigt, welche diese Aufgabe erfüllen. Die Nieten 53 haben den zusätzlichen Vorteil, dass sie an der Innenseite 45 etwas erhaben sind und dadurch die Reibung zwischen Halteriemen 41 und Schuh erhöhen.

**Legende:**

| | |
|---|---|
| 11 | Schuh-Pedal-Bindungssystem |
| 13 | Fahrradbindungssystem |
| 15 | Fahrradpedal |
| 16 | Pedalkörper |
| 17a,17b | Pilzstreifen, erster Haftstreifen |
| 19 | Velourstreifen, zweiter Haftstreifen |
| 21 | Pedalachse |
| 23a,23b | Federn |
| 25 | Auftrittsfläche |
| 27 | Schuhsohle |
| 28 | Schuh |
| 29a,29b | Pilzkopf |
| 31 | Schlinge |
| 33a,33b | Pfeilrichtung |
| 35 | Halteplatte, Schuhadapter |
| 36 | Ausnehmungen |
| 38 | Haltekörper |
| 37 | Erhebung in Gestalt eines Kegelstumpfs, Positionierhilfe |
| 39 | Ausnehmung |
| 41 | Halteriemen |
| 43 | Aussenseite |
| 45 | Innenseite |
| 47 | Schnalle |
| 49 | Halteriemenende |
| 51 | Klettoberfläche |
| 53 | Nieten |

## Patentansprüche

1. Schuh-Pedal-Bindungssystem, insbesondere Fahrradpedalsystem (11) mit
- einem Pedal (15), umfassend
- einen Pedalkörper (16) mit wenigstens einer Auftrittsfläche (25) für einen Schuh (28),
- ein erstes Haltemittel (17), welches an der wenigstens einen Auftrittsfläche (25) angeordnet ist und
- einem zweiten Haltemittel (19), welches an dem Schuh (28) festlegbar ist und zur lösbaren Verbindung des Schuhs (28) an der Auftrittsfläche (25) ausgebildet ist,
**dadurch gekennzeichnet,**
**dass** das erste und zweite Haltemittel ein erster und zweiter Haftstreifen (17,19) sind.

2. Schuh-Pedal-Bindungssystem nach Anspruch 1, **dadurch gekennzeichnet, dass** der erste Haftstreifen ein Pilzband (17) oder ein Hakenband ist und der zweite Haftstreifen ein Velourband (19) oder ein Flauschband ist.

3. Schuh-Pedal-Bindungssystem nach Anspruch 1, **dadurch gekennzeichnet, dass** sowohl der erste als auch der zweite Haftstreifen ein Pilzband (17,19) ist.

4. Schuh-Pedal-Bindungssystem nach einem der Ansprüche 1 bis 3, **dadurch gekennzeichnet, dass** an dem Pedalkörper (16) wenigstens eine Ausnehmung (36) vorgesehen ist, in welcher Ausnehmung (36) ein den ersten Haftstreifen (17) haltender Haltekörper (38) austauschbar festgelegt werden kann.

5. Schuh-Pedal-Bindungssystem nach einem der Ansprüche 1 bis 4, **dadurch gekennzeichnet, dass** der zweite Haftstreifen (19) an einem Halteriemen (41) bzw. Halteband festgelegt ist, resp. dass der Halteriemen (41) vollständig fortlaufend mit Haftstreifen ausgestattet ist, welcher Halteriemen (41) seinerseits an einem Schuh bzw. einem Fahrradschuh (28) angebracht werden kann.

6. Schuh-Pedal-Bindungssystem nach einem der Ansprüche 1 bis 5, **dadurch gekennzeichnet, dass** der erste und zweite Haftstreifen (17,19) im verbundenen Zustand durch Aufkanten des zweiten Haftstreifens (19) im Wesentlichen in einem Aufklappwinkel in Frontalebene in Richtung von der Pedalachse (21) weg, analog einer Hyper-Pronationsbewegung oder einer Hyper-Supinationsbewegung, mit geringerem Kraftaufwand voneinander lösbar sind, als in anderen Abzugsrichtungen.

7. Schuh-Pedal-Bindungssystem nach einem der Ansprüche 1 bis 6, **dadurch gekennzeichnet, dass** der zweite Haftstreifen (19) eine grössere Haftfläche als der erste Haftstreifen (17) aufweist.

8. Schuh-Pedal-Bindungssystem nach einem der Ansprüche 1 bis 4 oder 6 bis 7, **dadurch gekennzeichnet, dass** der zweite Haftstreifen (19) an einem Schuhadapter (35) angeordnet ist, welcher mit der Schuhsohle (27) des Schuhs (28) im Fussballenbereich verbindbar ist.

9. Schuh-Pedal-Bindungssystem nach Anspruch 8, **dadurch gekennzeichnet, dass** der Schuhadapter eine Halteplatte (35) ist, welche unter Formschluss mit der Schuhsohle (27) verbindbar ist.

10. Schuh-Pedal-Bindungssystem nach einem der Ansprüche 1 bis 4 oder 6 bis 9, **dadurch gekennzeichnet, dass** an der wenigstens einen Auftrittsfläche (25) eine Positionierhilfe (37) zur Positionierung des Fahrradschuhs (28) an dem Fahrradpedal (25) vorgesehen ist.

11. Schuh-Pedal-Bindungssystem nach Anspruch 10, **dadurch gekennzeichnet, dass** die Positionierhilfe im Wesentlichen die Gestalt einer Erhebung (37) besitzt, welcher sich in Richtung weg von der Auftrittsfläche (15) verjüngt.

12. Schuh-Pedal-Bindungssystem nach einem der Ansprüche 1 bis 11, **dadurch gekennzeichnet, dass** das Zusammenwirken des ersten und zweiten Haftstreifens (17,19) derart aufeinander abgestimmt ist, dass diese erst aneinander haften, wenn ein Anpressdruck zwischen dem ersten und zweiten Haftstreifen (17,19) vorhanden ist, welcher einem Gewicht zwischen 0,1 und 5 kg, bevorzugt zwischen 0,5 und 3 kg und besonders bevorzugt zwischen 15und 70 kg entspricht.

13. Schuh-Pedal-Einheit (13) mit
- einem Schuh-Pedal-Bindungssystem (11) gemäss einem der Ansprüche 1 bis 11 und
- einem Schuh (28), an welchem der zweite Haftstreifen (19) festgelegt ist.

14. Schuh-Pedal-Einheit nach Anspruch 13, **dadurch gekennzeichnet, dass** die Schuhsohle (27) insbesondere im Fussballenbereich eine Oberfläche besitzt, an welcher der zweite Haftstreifen (27) durch Verklebung und/oder einen Formschluss befestigt ist.

15. Schuh-Pedal-Einheit nach einem der Ansprüche 13 oder 14, **dadurch gekennzeichnet, dass** die Erhebung (37) in einer Ausnehmung (39) an der Schuhsohle (27) aufnehmbar ist, wobei die Innenabmessungen der Ausnehmung (39) im Wesentlichen den Aussenabmessungen der Erhebung (37) entsprechen.
